# EUROPEAN PATENT APPLICATION

(11) **EP 1 741 523 A2**
(43) Date of publication of application: **10.01.2007**
(21) Application number: 06013829.4
(22) Date of filing: 04.07.2006
(51) Int. Cl.: B25J 19/00

(54) **Industrial robot with a cable harness**

(30) Priority: 07.07.2005 JP 2005198762
(71) Applicant: FANUC LTD, Minamitsuru-gun, Yamanashi 401-0597 (JP)
(72) Inventor: Kurebayashi, Hidenori, Minamitsuru-gun Yamanashi 401-0511 (JP); Jinushi, Munehiro, Minamitsuru-gun Yamanashi 401-0511 (JP)
(74) Representative: Thum, Bernhard

(57) **Abstract**

An industrial robot (1) including a base (2) carrying out a relative linear motion, a body (3) carrying out a relative rotary motion and a cable harness (5) for supplying electric power or transmitting control signals to operating circuits, wherein the cable harness (5) includes a first bundle (12) located in the base (2) and a second bundle (13) located in the body (3) to be integral with the body, wherein, in the first bundle (12), a plurality of multi-core cables (6) and tubes (10) are flatly arranged parallel to each other and each of the multi-core cables (6) and the tubes (10) are bonded to the adjacent one with adhesive, and wherein, in the second bundle (13), the plurality of multi-core cables (6) and tubes (10) are separated from each other.

## Description

### BACKGROUND OF THE INVENTION

### 1. Field of the Invention

The present invention relates to an industrial robot comprising a linear motion part relatively operable along a linear path, a rotary motion part relatively operable along a rotary path and a cable harness arranged in the linear motion part and the rotary motion part.

### 2. Description of the Related Arts

Generally, an industrial robot having a plurality of motion axes comprises a linear motion part, a rotary motion part and a cable harness. There are two kinds of motion axes; one being a linear motion axis for relatively linearly operating, for example, two links with each other and the other being a rotary motion axis for relatively rotary operating the two links with each other. The linear motion axis and the rotary motion axis may often be incorporated in one robot. The linear motion part operates along the linear motion axis and the rotary motion part operates along the rotary motion axis, respectively. The cable harness includes bundles of electric power wires, signal lines, tubes or the like and is arranged on the inside or outside of the robot.

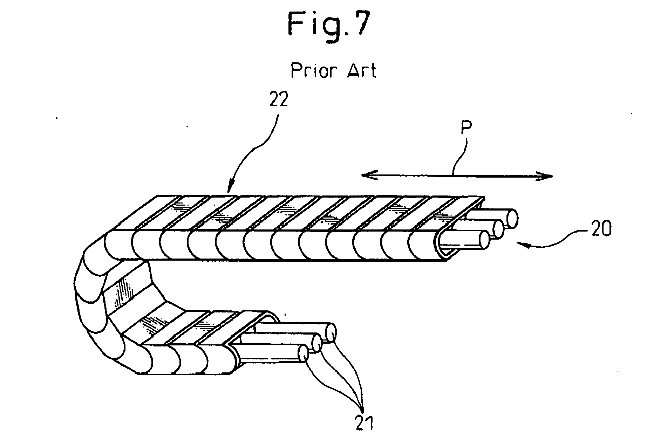

Fig. 7 illustrates a portion of the cable harness located on the inside of the linear motion part. The cable harness 20 is accommodated in a parallel manner in a cable track 22 used as a protector. By accommodating the cable harness 20 in the cable track 22, a plurality of electric wires 21, which are umbilical elements, are prevented from being entangled with or separated from each other. The cable track 22 is bent in a U-turn shape to absorb an excessive length of the cable harness 20 linearly moving in the direction P.

While the cable track 22 can be flexibly bent to some extent, it is impossible to have a small radius of curvature when it is bent. As the cable track 22 has a large radius of curvature, it is necessary to provide a large space within a robot, resulting in a problem in that the size of the robot is large. Also, this cable track 22 is applied solely to the cable harness 20 arranged in the linear motion part of the industrial robot and is not applicable to that arranged in the rotary motion part and repeatedly subjected to a torque.

Another method for preventing the entanglement of electric wires is disclosed in Japanese Unexamined Patent Publication 2003-168326 (JP-A-2003-168326). In a cable harness disclosed in this patent publication, a plurality of umbilical elements are flatly arranged and bonded with adhesive so that the adjacent elements are integral with each other. The disclosed flat cable does not occupy a large space in the robot, which is advantageous for the size of the robot. To a cable arranged in a rotary motion part of the robot, however, a large tension is applied due to a torque, resulting in a risk in that adhered portions, between the adjacent electric wires, are torn or the individual electric wires are broken. For such reasons, it is impossible to apply such a kind of cable harness to the rotary motion parts of the robot.

### SUMMARY OF THE INVENTION

An object of the present invention is to provide an industrial robot having a small cable harness arranged in the rotary motion part without disturbing the durability thereof as well as excellent in the reliability of electric connections.

To achieve the above-mentioned object, according to the present invention, an industrial robot comprising a linear motion part carrying out a relative linear motion, a rotary motion part carrying out the relative rotary motion, and a cable harness arranged in the linear motion part and the rotary motion part is provided; the cable harness comprising a first bundle located in the linear motion part and a second bundle located in the rotary motion part to be integral with the former; in the first bundle, a plurality of umbilical elements being flatly arranged parallel to each other and each of the umbilical elements being bonded to the adjacent one with adhesive, and in the second bundle, the plurality of umbilical elements being separated from each other.

According to this invention, as a plurality of umbilical elements are flatly arranged parallel to each other in the first bundle of the cable harness and an individual umbilical element is bonded to the adjacent one with adhesive, the first bundle becomes compact and the individual umbilical elements are prevented from being entangled to each other. Also, as the plurality of umbilical elements in the second bundle of the cable harness are separate from each other, each of the umbilical elements is not restricted by the adjacent one to enhance the flexibility of the second bundle. Accordingly, the durability of the cable harness located in the rotary motion part is not disturbed to improve the reliability of the electric connections. Also, as a protector such as a cable track is unnecessary, the compactness of the cable harness can be maintained.

The present invention provides an industrial robot comprising at least one multi-core cable. According to this invention, while an outer diameter of the multi-core cable is large, a lateral width becomes smaller in comparison with a case wherein a plurality of single-core electric wires is flatly arranged. Accordingly, the compactness of the cable harness is more enhanced.

The present invention provides an industrial robot wherein the multi-core cable is a shielded cable. According to this invention, it is possible to carry out electromagnetic shielding of a plurality of electric wires at once, whereby the production of the shielded cables becomes easy. Also, the anti-noise property of the signal lines in the multi-core cable is enhanced to accurately operate actuators or others based on the command issued from a controller.

The present invention provides an industrial robot wherein the umbilical elements in the second bundle have lengths different from each other. According to this invention, if the umbilical element disposed farther from the motion axis as a rotary center is selected to be longer and that disposed closer to the motion axis is selected to be shorter, it is possible to avoid the generation of tension in the individual umbilical element due to the torque thereof during the rotary motion of the rotary motion part, without forming useless slack in the umbilical element.

The present invention provides an industrial robot wherein the second bundle is inserted into a pipe member. According to this invention, as the second bundle is inserted into the pipe member, the second bundle is prevented from being in contact with another part. Thereby, it is possible to facilitate the reliability of the electric connections of the industrial robot.

The present invention provides an industrial robot wherein, in the second bundle, an outer coating of the multi-core cable is removed. According to this invention, as the outer coating of the multi-core cable is removed in the second bundle, the flexibility of the second bundle is enhanced to prevent a large tension being generated in the circumference of the multi-core cable, resulting in the improvement in the durability (against torque) of the cable harness.

### BRIEF DESCRIPTION OF THE DRAWINGS

The above-mentioned and other objects of the present invention will be more apparent by the following description of the preferred embodiments of the present invention with reference to the attached drawings, wherein
Fig. 1 is a perspective view of one embodiment of an industrial robot according to the present invention;
Fig. 2 is a perspective view of cable harness arranged in the industrial robot shown in Fig. 1;
Fig. 3 is a cross-section taken along line A-A of the cable harness shown in Fig. 2;
Fig. 4 is a perspective view exaggeratedly illustrating a second bundle of the cable harness;
Fig. 5 is a perspective view of the second bundle of the cable harness protected with a pipe member;
Fig. 6 is a perspective view of the second bundle of the cable harness from which coatings are removed; and
Fig. 7 is a perspective view of one example of a conventional cable harness.

### DETAILED DESCRIPTION

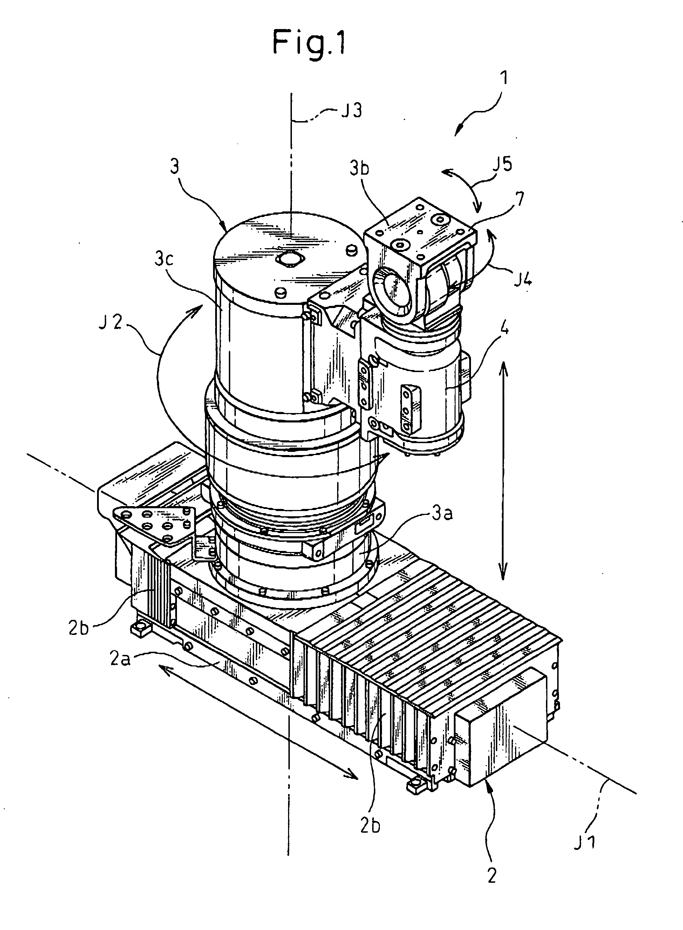

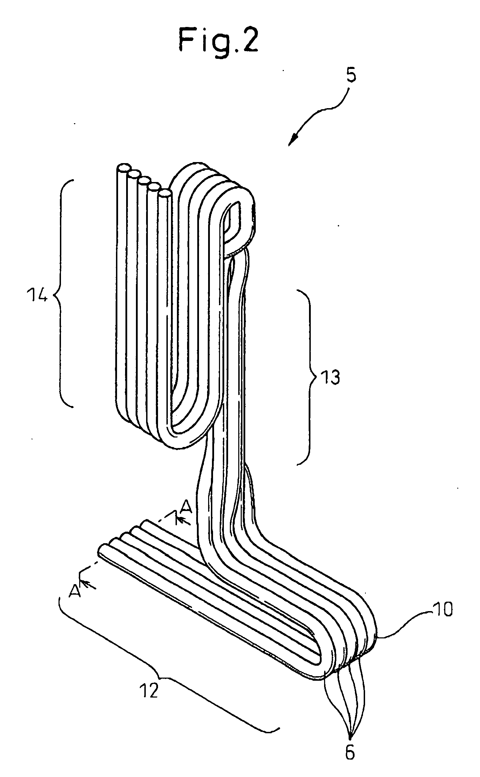

The present invention will be described in detail below with reference to the preferred embodiments shown in the attached drawings. Fig. 1 illustrates one embodiment of the inventive industrial robot, and Figs. 2 to 6 illustrate a cable harness arranged in the industrial robot according to this embodiment.

As shown in Fig. 1, the industrial robot 1 according to this embodiment is an articulated robot for supporting a work piece, including a base (a linear motion part) 2 having a J1 axis as a linear motion axis, a J2 axis as a rotary motion axis and a J3 axis as a linear motion axis sequentially arranged from the base side to be subjected to the relative linear motion along the J1 axis, a body (a rotary motion part) 3 arranged vertically on the base 2 to be subjected to the relative rotary motion along the J2 axis, a cable harness 5 (Fig. 2) arranged in the base and the body 3, and equipments (not shown) such as a drive source or a controller for supplying electric power or control signals to actuators through the cable harness 5.

The base 2 is provided with a servomotor (not shown) as an actuator, a reduction unit (not shown) for reducing the rotational speed of the servomotor to increase the output torque, a ball screw (not shown) as a linear motion mechanism and a support table 2a screw-engaged with the ball screw. The support table 2a is linearly movable left and rightward (in the direction of J1 axis) by the rotation of the ball screw together with the motor. Bellows 2b are provided on both sides of the support table 2a to be extendable and shrinkable as the support table 2a moves. Such a structure of the base is known in the art. In this regard, the linear motion mechanism may be formed of a rack and a pinion or belt driving mechanism. Also, the support table may be directly driven by a hydraulic cylinder.

The body 3 is fixed on the support table 2a of the base 2 via a coupling part 3a to be rotatable about a vertical motion axis (J3) and linearly movable upward and downward (in the direction of J3). The body 3 is driven to rotate by a servomotor (not shown) having a reduction unit and is driven to linearly move by another servomotor 4 and a ball screw (not shown). The motor and the reduction unit for the rotary motion are arranged within the body 3, while the motor and the reduction unit for the linear motion are arranged outside of the body 3. Note the linear motion mechanism for the body 3 may, of course, be replaced by another linear motion mechanism.

At a tip end of the body 3, there is a wrist 7 having two rotary axes J4 and J5, and a front end of the wrist 7 forms a mount 3b for an end effecter such as a hand tool. The specification of the end effecter varies in accordance with dimensions and shapes of a work piece to be supported by the robot 1, and is defined by the objective work piece. A robot arm may be provided between the wrist 7 and the end effecter.

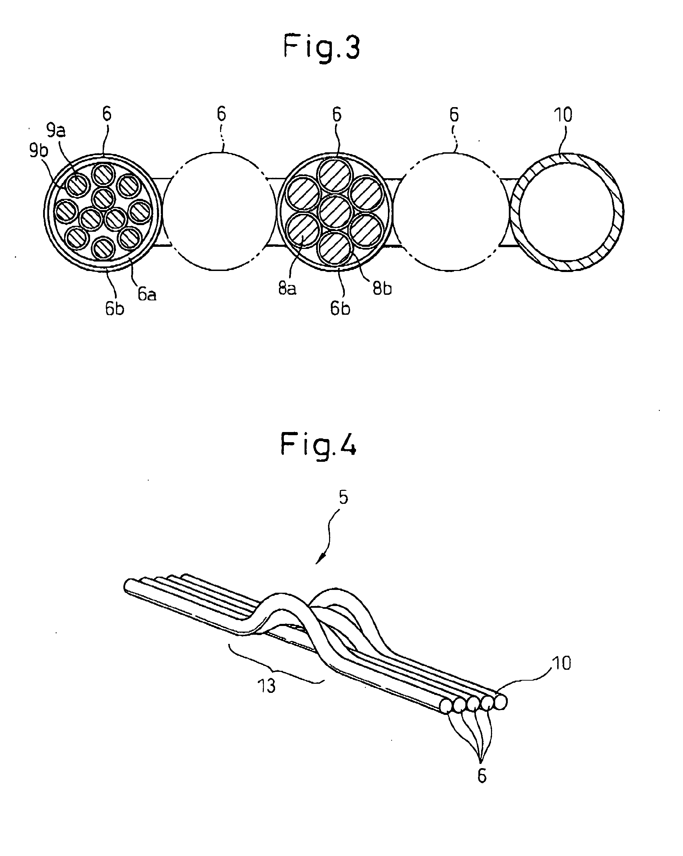

As shown in Fig. 2 or others, the cable harness 5 includes a plurality of multi-core cables 6 and electric connectors (not shown) provided at tip ends of the multi-core cables 6 and a hollow tube 10 (Fig. 3) for supplying cooling water, air or gas to an end of the end effecter, and is arranged in the interior of the base 2 and the body 3. The multi-core cable 6 consists of a plurality of electric power wires (umbilical elements) 8 for supplying electric power to motors of the respective axes of the robot 1 and the end effecter, and a plurality of signal lines (umbilical elements) 9 for transmitting and receiving control signals between the encoders or sensors, various controlling apparatuses and the controller (see Fig. 3).

As shown in Fig. 3, the outside of core wires 8a and 9a in the electric power line 8 and the signal line 9, respectively, are covered with inner coatings 8b, 9b of insulative resin. The plurality of electric power lines 8 and signal lines 9 are bundled to a single multi-core cable (umbilical element) 6, respectively. A circumference of the multi-core cable 6 formed by bundling the plurality of signal lines 9 is covered with a braided wire 6a and the outside thereof is covered with an insulative coating 6b of insulative resin. The braided wire 6a is formed of thin wires knitted in a lattice manner. Instead of the braided wire 6a, copper foil or others may be used as a shield member.

The multi-core cable 6 having a plurality of signal lines 9 is subjected, as a whole, to the shield treatment to prevent the plurality of signal lines 9 from being entangled together or becoming bulkiness. Also, the handling of the cable 6 is extremely improved. By subjecting the signal lines 9 to the shield treatment, erroneous motion due to noise generated in the electronic apparatus itself is avoidable.

On the other hand, if the multi-core cable 6 is not used, it is necessary to use a shielded wire (not shown) as an individual signal line 9. The individual shielded wire consists of a core line of conductive material, an insulative inner coating covering the circumference of core line, a braided wire provided around the insulative inner coating and an insulative outer coating provided around the braided wire.

The terminal treatment of the electromagnetically shielded cable 6 must be carried out so that the core lines 8a and 9a are not short-circuited to the braided wire 6a. First, a predetermined length of the outer coating 6b is peeled off to expose the braided wire 6a, then the inner coatings 8a and 9b covering the circumference of the core lines 8a and 9a are peeled off to expose the core lines 8a and 9a, and the braided wire 6a is folded back and grounded so that the braided wire 6a is not in contact with the core lines 8a and 9a. The exposed core lines 8a and 9a are crimped the terminals and accommodated in an electric connector not shown. To prevent the shielding property of the shielded electric wire from being damaged, a connector of a shielded type is used.

The electric connector, not shown, is a multi-pole connector accommodating a plurality of terminals in a connector housing, capable of being connected in a one-touch manner to a mating electric connector provided in the respective equipment of the robot so that the cable harness 5 is electrically connected to the respective equipment.

The cable harness 5 will be described in more detail based on Fig. 2. In the cable harness 5, four multi-core cables 6 and one tube (umbilical element) 10 are arranged along a path in the base 2 and the body 3 of the robot 1. In an area corresponding to the linear motion part of the base 2 and the body 3 of the robot 1, the cables and the tube are flatly located and bonded together with soft resinous adhesive 15 to not reduce the flexibility of the cable harness 5 (see Fig. 3). As the cable harness 5 is formed by such an adhesive bonding, the harness 5 becomes compact and the multi-core cables 6 are prevented from being entangled with or separated from each other. Even if single-core cables are used instead of the multi-core cables 6, a plurality of electric power lines 8 and a plurality of signal lines 9 are flatly disposed to form a cable harness in the same manner as above.

The arranged cable harness 5 includes a first bundle 12 located in the base 2 of the robot 1, a second bundle 13 located in the body 3 of the robot 1, and a third bundle 14 located in a linear motion part 3c of the body 3.

In the first and third bundles 12, 14, the multi-core cables 6 and the tube 10 are flatly arranged and the adjacent ones thereof are bonded together with adhesive. In the second bundle 13 located between the first and third bundles 12 and 14, the multi-core cables 6 and the tube 10 are individually separated from each other. Each of the first to third bundles 12, 13 and 14 has excessive length, wherein the excessive length in the first and third bundles is folded in a U-turn manner and the excessive length in the second bundle is bulged outside (see Fig. 4).

The first and third bundles 12 and 14 move together with linear motion of the base 2 and the body 3, respectively, to absorb the linear displacement within the an excessive length, whereby the cable harness 5 is prevented from breaking due to the tension. The second bundle 13 moves together with the rotary motion of the body 3 to absorb the rotary displacement within the excessive length, whereby the cable harness 5 is prevented from breaking due to the torque. Particularly, as the individual multi-core cables 6 and the tube 10 are not bonded with adhesive but are separate from each other, they are free from the restriction caused by adjacent elements, whereby the flexibility of the second bundle 13 is facilitated to be durable against the torque.

Fig. 4 illustrates the second bundle 13 wherein the excessive length thereof is bulged outside. The first and the third bundles 12 and 14 are eliminated. The excessive length is made to be different in the respective multi-core cables 6 so that it is larger in the multi-core cable 6 located on the outer side than that located on the inner side. Thereby, the excessive length of the multi-core cable 6 located farther from a rotary center becomes longer, while that of the multiple-core cable 6 closer to the rotary center becomes shorter, whereby the useless excessive length is not formed and no tension is generated in the individual electric wire due to the torque during the rotary motion of the body 3.

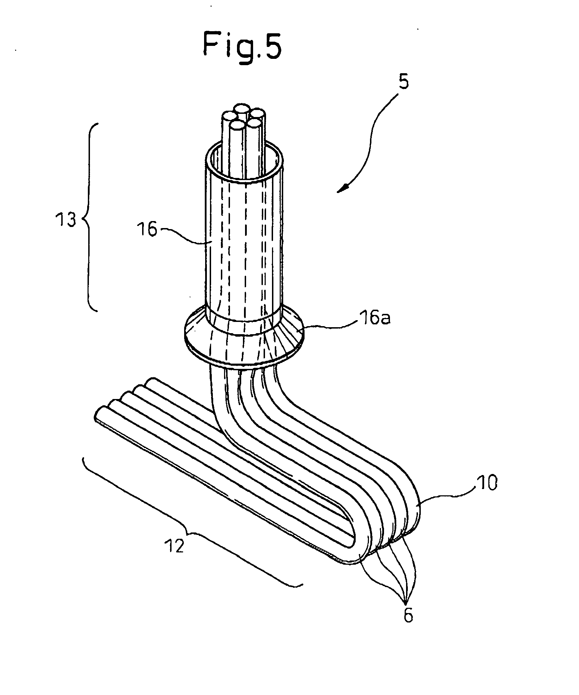

In Fig. 5, the cable harness 5 is inserted from one opening of a pipe member 16 to the other opening thereof so that the pipe member 16 is located on the second bundle 13 to avoid the second bundle being damaged during the rotary motion due to the contact with other parts. The third bundle 14 is eliminated. The pipe member 16 is made by cutting a metallic pipe to a predetermined length and forming a tapered section 16a in the opening into which is inserted the harness. By this tapered section 16a, the cable harness 5 is guided and smoothly inserted into the pipe member 16.

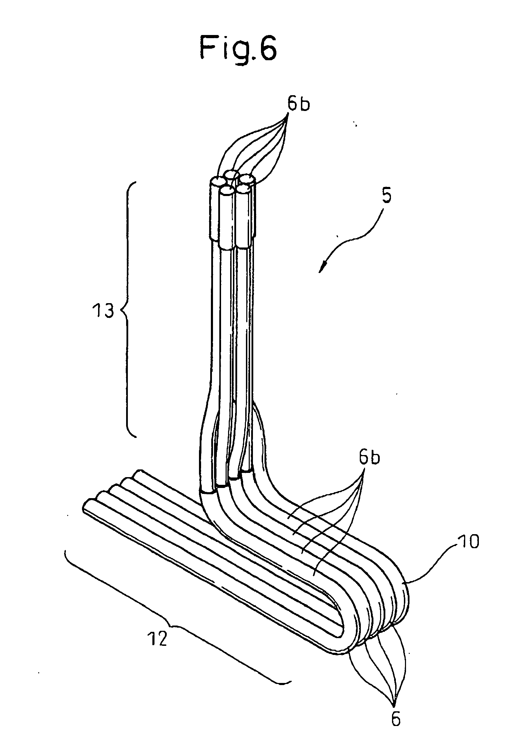

In Fig. 6, the outer coating 6b of the individual multi-core cable 6 in the second bundle 13 is peeled off. The third bundle 14 is eliminated. By removing the outer coating 6b, the individual multi-core cable 6 becomes thinner to facilitate the flexibility of the second bundle 13, whereby the tension due to the torque is mitigated.

As mentioned above, according to this embodiment, as the first and third bundles 12 and 14 of the cable harness 5 are formed of a plurality of multi-core cables 6 and one tube 10 flatly arranged parallel to each other and bonded together with adhesive between every adjacent elements, it is possible to make the first and third bundles 12 and 14 compact and to prevent the multi-core cables 6 and the tube 10 from being entangled with each other. As the plurality of multi-core cables 6 and the tube 10 are separated from each other in the second bundle 13 of the cable harness 5, it is possible to facilitate the flexibility of the second bundle 13 and to enhance the durability (against torque) thereof.

It should be noted that the present invention is not limited to the above-mentioned embodiment, but includes various changes and modifications. For example, while the industrial robot 1 according to this embodiment includes the base 2, the body 3 and the cable harness 5, an arm may be provided in the body 3 and an end-effecter is mounted to the end-effecter. In other words, the present invention is not limited to an industrial robot having a particular construction.

Also, while the cable harness 5 consists of the first, second and third bundles 12, 13 and 14, it may consists of solely the first and second bundles 12 and 13, or the first and second bundles 12 and 13 may be continuously formed. That is, the cable harness may be optionally structured in accordance with the specifications of the industrial robot.

As mentioned herein above, the present invention has been described in relation to the preferred embodiment, however, it will be understood by persons with skill in the art that various modifications and changes are possible without departing from the scope of claims defined later.

## Claims

1. An industrial robot (1), comprising;
a linear motion part (2) carrying out a relative linear motion,
a rotary motion part (3) carrying out a relative rotary motion, and
a cable harness (5) arranged in said linear motion part and said rotary motion part, **characterized in that**
said cable harness (5) comprises a first bundle (12) located in said linear motion part (2) and a second bundle (13) located in said rotary motion part (3) to be integral with said linear motion part(2);
in said first bundle (12), a plurality of umbilical elements (6, 10) being flatly arranged parallel to each other and each of said umbilical elements (6, 10) being bonded to an adjacent element with adhesive, and
in said second bundle 13), said plurality of umbilical elements (6, 10) being separated from each other.

2. An industrial robot (1) as defined in claim 1, wherein said cable harness (5) comprises at least one multi-core cable (6).

3. An industrial robot (1) as defined in claim 1, wherein said umbilical elements (6, 10) in said second bundle (13) have lengths different from each other.

4. An industrial robot (1) as defined in claim 1, wherein said second bundle (13) is inserted into a pipe member (16).

5. An industrial robot (1) as defined in claim 2, wherein said multi-core cable (6) comprises a shielded cable.

6. An industrial robot (1) as defined in claim 2, wherein in said second bundle (13), an outer coating of said multi-core cable (6) is removed.
